# EUROPÄISCHE PATENTSCHRIFT

(11) **EP 3 877 275 B1**
(45) Veröffentlichungstag und Bekanntmachung des Hinweises auf die Patenterteilung: **15.04.2026**
(21) Anmeldenummer: 19798637.5
(22) Anmeldetag: 06.11.2019
(51) Int. Cl.: B65D 5/54, B65D 5/66, B65D 85/10, B65B 19/22, B65B 35/44, B65B 35/50, B65B 61/20, B65D 75/32

(54) **PACKUNG FÜR PRODUKTE DER ZIGARETTENINDUSTRIE**
PACK FOR PRODUCTS IN THE CIGARETTE INDUSTRY
EMBALLAGE POUR PRODUITS DE L'INDUSTRIE DU TABAC

(30) Priorität: 07.11.2018 DE 102018127739
(43) Veröffentlichungstag der Anmeldung: 15.09.2021
(73) Patentinhaber: Focke & Co. (GmbH & Co. KG), 27283 Verden (DE)
(72) Erfinder: SCHNEIDER, Christoph, 27283 Verden (DE)
(74) Vertreter: Ellberg, Nils
(86) Internationale Anmeldenummer: PCT/EP2019/080401
(87) Internationale Veröffentlichungsnummer: WO 2020/094720

(56) Entgegenhaltungen:
- EP-A1- 1 961 675
- EP-A1- 2 923 968
- EP-A2- 0 752 370
- US-A1- 2007 261 704

## Beschreibung

Die Erfindung betrifft eine Packung für Produkte der Zigarettenindustrie, mit einem Schachtelteil zur Aufnahme eines Packungsinhalts und mit einem Deckel zum Verschließen des Schachtelteils, wobei Deckel und Schachtelteil mit jeweiligen Schließkanten bei geschlossener Packung aneinander anliegen, gemäß dem Oberbegriff des Anspruchs 1.

Die vorliegende Erfindung befasst sich insbesondere mit Packungen für alternative Tabakprodukte, beispielsweise mit Packungen für in Blisterverpackungen angeordneten Aromakapseln. In diesem Marktsegment ist aufgrund eines allgemeinen Trends zu alternativen Produkten mit ansteigenden Verkaufszahlen zu rechnen. Auf der anderen Seite werden derartige Produkte erst seit vergleichsweise kurzer Zeit vertrieben und der Markt ändert sich vergleichsweise schnell, sodass die Tabakkonzerne oft gezwungen sind auf Veränderungen des Marktes und auf neue Anforderungen schnell zu reagieren.

Auf der anderen Seite müssen auch Packungen für alternative Tabakprodukte sich daran festhalten lassen, ob sie auf Verpackungsmaschinen schnell und kostengünstig herstellbar sind.

Daneben hat der Konsument der Tabakprodukte (unabhängig davon, ob es sich um herkömmliche oder alternative Tabakprodukte handelt) ein Interesse daran, zuverlässig feststellen zu können, ob der Inhalt der Packung unversehrt und/oder original ist.

Aus der EP 1 961 675 A1 ist eine Zigarettenpackung mit einem Schachtelteil 8 und einem Zungendeckel 10 bekannt. Der Zungendeckel 10 umfasst eine obere Wand 12 und eine Zunge 14, die so angepasst ist, dass die obere Wand ein offenes Ende des Schachtelteils 8 verschließt und die Zunge über einer Vorderwand 30 des Schachtelteils 8 liegt, wenn die Zigarettenpackung hergestellt wird. Ferner weist die Packung ein Paar Verbindungslaschen 20 auf, die mit gegenüberliegenden Seitenkanten der der Zunge 14 durch Perforationslinien 26 verbunden sind. Beim erstmaligen Öffnen der Packung werden diese Perforationslinien aufgetrennt.

Hiervon ausgehend liegt der Erfindung die Aufgabe zu Grunde, Maßnahmen vorzuschlagen, mit denen sich die vorstehenden Anforderungen umsetzten lassen.

Eine erfindungsgemäße Packung weist die Merkmale des Anspruchs 1 auf. Es ist demnach vorgesehen, dass die Packung bzw. der Deckel einen Deckelinnenlappen aufweist, der über eine Faltlinie mit einer Vorderwand des Deckels verbunden ist und bis zum erstmaligen Öffnen der Packung innenseitig an der Vorderwand des Deckels anliegend angeordnet ist, und dass der Deckelinnenlappen nach dem erstmaligen Öffnen der Packung von der Vorderwand des Deckels wegschwenkbar und als Stecklasche zum Verschließen der Packung zwischen eine Vorderwand des Schachtelteils und einer Vorderwand eines im Schachtelteil angeordneten Kragens einsteckbar ist.

Vorzugsweise kann vorgesehen sein, dass Deckel und Schachtelteil im Bereich der wenigstens einen Schließkante durch eine Restverbindung miteinander verbunden sind, insbesondere entlang einer auftrennbaren Perforationslinie.

Gemäß einer ersten Variante der Packung kann vorgesehen sein, dass die Packung eine Vorderseite, eine der Vorderseite gegenüberliegende Rückseite, zwei die Vorderseite und Rückseite miteinander verbindende Schmalseiten und eine zu Vorderseite, Rückseite und Schmalseiten quergerichtete Bodenseite aufweist, und dass die temporäre Verbindung zwischen Deckel und Schachtelteil im Bereich von wenigstens einer Packungskante gebildet ist, die parallel zu Packungskanten der Packung verläuft, die jeweils Vorderseite bzw. Rückseite mit den Schmalseiten verbinden.

Vorzugsweise kann vorgesehen sein, dass der Deckel eine Stirnwand, eine Vorderwand und beiderseits der Vorderwand angeordnete Seitenlappen aufweist, und dass Seitenwände des Schachtelteils durch einander überlappende und miteinander verbundene Seitenlappen des Schachtelteils gebildet sind, die jeweils beiderseits einer Vorderwand und einer Rückwand des Schachtelteils angeordnet sind, und dass ein Paar von Seitenlappen des Schachtelteils bis in den Bereich des Deckels verlängert und mit den Seitenlappen des Deckels verbunden sind, und dass die Restverbindung zwischen den Seitenlappen des Deckels und der Vorderwand des Deckels gebildet ist, sodass bei erstmaliger Öffnung der Packung die Restverbindung aufgetrennt und der Deckel mit Stirnwand und Vorderwand geöffnet wird, wobei die Seitenlappen des Deckels in Verbindung mit den Seitenlappen des Schachtelteils bleiben.

Ferner kann vorgesehen sein, dass die Vorderwand des Kragens mit der Vorderwand des Schachtelteils verbunden ist, insbesondere durch Verklebung, wobei die Verbindung zwischen Kragen und Schachtelteil auf einer derartigen Höhe des Schachtelteils angeordnet ist, dass die Stecklasche komplett zwischen Vorderwand des Schachtelteils und Vorderwand des Kragens einsteckbar ist, nämlich unterhalb eines Einsteckbereichs der Stecklasche.

In allen Varianten der Packung kann vorgesehen sein, dass die Packung in Art einer Hinge-Lid-Packung ausgebildet ist.

Ferner kann in allen Varianten der Packung vorgesehen sein, dass neben dem eigentlichen Packungsinhalt auch ein Druckträger als Coupon oder dergleichen in der Packung angeordnet ist, der vorzugsweise zwischen dem Packungsinhalt und einem in der Packung angeordneten Kragen angeordnet ist.

Weitere bevorzugte Einzelheiten der Erfindung sind der Beschreibung und den Zeichnungen zu entnehmen.

Bevorzugte Ausführungsbeispiele werden nachfolgend anhand der Zeichnung beschrieben, wobei nur das erste Ausführungsbeispiel gemäß Fig. 1 bis 4 eine erfindungsgemäße Lösung zeigt:
- Fig. 1: ein erstes Ausführungsbeispiel einer Packung für Produkte der Zigarettenindustrie in räumlicher Darstellung mit geschlossenem Deckel vor erstmaliger Ingebrauchnahme,
- Fig. 2: die Packung gemäß Fig. 1 mit geöffnetem Deckel,
- Fig. 3: die Packung gemäß Fig. 1 und 2 mit geschlossenem Deckel nach erstmaliger Ingebrauchnahme,
- Fig. 4: einen Zuschnitt für die Packung gemäß Fig. 1 bis 3,
- Fig. 5: ein zweites Ausführungsbeispiel einer Packung für Produkte der Zigarettenindustrie in räumlicher Darstellung mit geschlossenem Deckel vor erstmaliger Ingebrauchnahme,
- Fig. 6: die Packung gemäß Fig. 5 mit geöffnetem Deckel,
- Fig. 7: einen Zuschnitt für die Packung gemäß Fig. 5 und 6,
- Fig. 8: ein drittes Ausführungsbeispiel einer Packung für Produkte der Zigarettenindustrie in räumlicher Darstellung mit geschlossenem Deckel vor erstmaliger Ingebrauchnahme,
- Fig. 9: die Packung gemäß Fig. 8 mit geöffnetem Deckel,
- Fig. 10: die Packung gemäß Fig. 8 und 9 mit geschlossenem Deckel nach erstmaliger Ingebrauchnahme,
- Fig. 11: einen Zuschnitt für die Packung gemäß Fig. 8 bis 10,
- Fig. 12: eine schematische räumliche Darstellung eines ersten Ausführungsbeispiels eines Teils einer Vorrichtung zum Herstellen der Packungen gemäß Fig. 1 bis 11, und
- Fig. 13: eine schematische räumliche Darstellung eines zweiten Ausführungsbeispiels eines Teils einer Vorrichtung zum Herstellen der Packungen gemäß Fig. 1 bis 11.

Die Erfindung befasst sich mit der Herstellung von Packungen 10 für Produkte 11 der Zigarettenindustrie. Bei den Produkten 11 handelt es sich im vorliegenden Fall um Aromakapseln, die in einer speziellen Blisterverpackung 12 angeordnet sind. Die gezeigten Packungen 10 können im Rahmen der Erfindung aber auch andere Produkte 11 der Zigarettenindustrie aufnehmen.

Die exemplarisch genannten Aromakapseln enthalten Tabak, z.B. in granulierter Form, und vorzugsweise verschiedene Aromen und können in geeigneten Geräten konsumiert werden. Die Packungen 10 enthalten neben den eigentlichen Produkten 11 noch eine Informationsbeilage, z.B. in Form eines Coupons 13, und sind als Hartpackung ausgebildet. Der Verkauf derartiger Packungen 10 kann als sog. Refill-Pack erfolgen.

Um die Echtheit und Unversehrtheit der Packungen 10 zu garantieren, werden die Packungen 10 mit einer Art Originalitätsverschluss ausgestattet, der beim ersten Öffnen der Packung 10, also der erstmaligen Ingebrauchnahme der Packung 10, zerstört wird. Der zerstörte Originalitätsverschluss zeigt eine Bruchkante an einer für den Konsumenten sichtbaren Stelle und zeigt diesem somit an, dass die Packung 10 bereits geöffnet wurde und folglich nicht neu ist.

Als Produkte 11 der Zigarettenindustrie gelten im Übrigen auch Tabakprodukte wie Zigaretten, Zigarillos und dergleichen, aber auch neuartige Tabakprodukte, wie beispielsweise heat-not-burn Produkte oder Liquidträger für E-Zigaretten, usw.

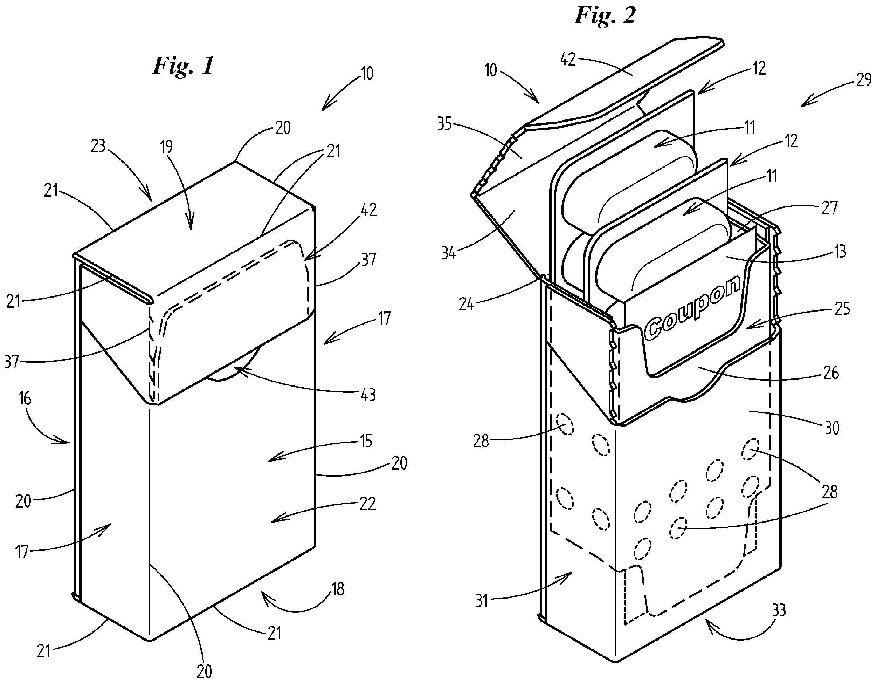

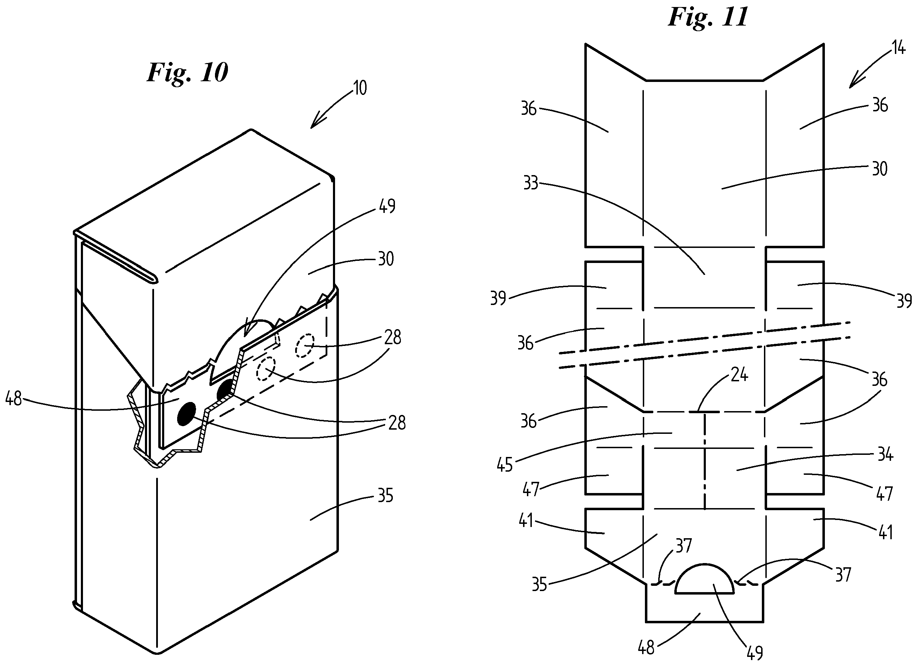

### Gemeinsame Merkmale der in den Fig. 1 bis 11 gezeigten Packungen 10:

Die Packungen 10 sind aus einem einstückigen bzw. einteiligen Zuschnitt 14 aus Verpackungsmaterial hergestellt, z. B. aus Karton.

Die Packungen 10 sind quaderförmig mit einer großflächigen Vorderseite 15 und einer der Vorderseite 15 gegenüberliegenden Rückseite 16. Zwischen Vorderseite 15 und Rückseite 16 erstrecken sich Schmalseiten 17. Quer zu Vorderseite 15, Rückseite 16 und Schmalseiten 17 verlaufen eine Bodenseite 18 und eine gegenüberliegende Oberseite 19.

Die Seitenflächen stoßen im Bereich von Packungskanten 20, 21 zusammen, wobei Packungskanten 20 zwischen Vorderseite 15 bzw. Rückseite 16 und den jeweiligen Schmalseiten 17 im vorliegenden Fall im Querschnitt rechtwinklig ausgebildet sind. Bei diesen Packungskanten 20 spricht man in der Regel auch von den aufrechten Packungskanten 20 ausgehend von einer auf der Bodenseite 18 stehenden Packung 10. Die aufrechten Packungskanten 20 verlaufen parallel zu einer gedachten Längsachse der Packungen 10. Die aufrechten Packungskanten 20 können natürlich auch im Querschnitt abgeschrägt oder abgerundet ausgebildet sein.

Die anderen Packungskanten 21, also zwischen der Bodenseite 18 bzw. der Oberseite 19 und Vorderseite 15, Rückseite 16 und Schmalseite 17, verlaufen quer zu den Packungskanten 20. Im vorliegenden Fall sind die Packungskanten 21 im Querschnitt rechtwinklig ausgebildet.

Die Packungen 10 verfügen über ein Schachtelteil 22 und einen Deckel 23. Der Deckel 23 ist zum Öffnen und Schließen der Packung 10 schwenkbar am Schachtelteil 22 gelagert, beispielsweise entlang eines Liniengelenks 24. Die Packungen 10 sind damit in Art einer Hinge-Lid-Packung ausgebildet.

Schachtelteil 22 und Deckel 23 liegen bei geschlossener Packung 10 bzw. bei geschlossenem Deckel 23 im Bereich von Schließkanten aneinander an. Da der Verlauf der Schließkanten je nach Ausführungsbeispiel voneinander abweicht, wird dieser nachfolgend beschrieben, wenn auf die Besonderheiten der einzelnen Ausführungsbeispiele eingegangen wird.

Alle Packungen 10 verfügen über einen Kragen 25, der wie üblich im Schachtelteil 22 angeordnet ist. Der Kragen 25 verfügt über eine Vorderwand 26 sowie zwei seitliche Seitenwände 27. Vorderwand 26 und Seitenwände 27 erstrecken sich innenseitig an entsprechenden Wandungen der Packung 10 und sind mit dieser bereichsweise verbunden, vorzugsweise durch Klebung mittels Leim 28. Als Leim 28 kommt vorzugsweise Kaltleim zum Einsatz.

In den Packungen 10 ist ferner der Coupon 13 angeordnet. Der Coupon 13 befindet sich dabei zwischen dem Kragen 25 bzw. der Vorderwand 26 des Kragens 25 und dem eigentlichen Packungsinhalt 29.

Bei dem Packungsinhalt 29 handelt es sich um zwei Blisterverpackungen 12, die die eigentlichen Produkte 11 enthalten. Die Blisterverpackungen 12 haben einen besonderen Aufbau, der später im Zusammenhang mit den Herstellungsverfahren erläutert wird. Im Rahmen der Erfindung kann die Anzahl der Blisterverpackungen 12 aber natürlich auch abweichen.

Die beiden den Packungsinhalt 29 bildenden Blisterverpackungen 12 liegen aneinander an, mit gleicher Orientierung der beiden Blisterverpackungen 12. Denkbar ist sowohl eine stehende Anordnung als auch eine liegende Anordnung der Blisterverpackungen 12.

Schachtelteil 22 und Deckel 23 werden durch einzelne oder mehrere Wandungen bzw. Lappen des Zuschnitts 14 gebildet. Die Benennung der Wände des Schachtelteils 22 und des Deckels 23 wird dabei von der jeweiligen Seite der Packung 10 abgeleitet, an der sich die Wand befindet. Beispielsweise verfügt das Schachtelteil 22 über eine Vorderwand 30, die sich im Bereich der Vorderseite 15 der Packung 10 befindet und entsprechende Seitenwände 31, eine Rückwand 32 und eine Bodenwand 33 im Bereich der Schmalseite 17, der Rückseite 16 und der Bodenseite 18. Gleiches gilt entsprechend für den Deckel 23, der in allen Ausführungsbeispielen eine Stirnwand 34 im Bereich der Oberseite 19 der Packung 10 und eine Vorderwand 35 im Bereich der Vorderseite 15 der Packung 10 aufweist. Ferner werden in allen Ausführungsbeispielen die Schmalseiten 17 der Packungen 10 je nach Ausführungsbeispiel wenigstens teilweise durch miteinander verbundene Seitenlappen 36 gebildet.

Der eingangs angesprochene Originalitätsverschluss ist in allen drei Ausführungsbeispielen durch eine Restverbindung gebildet, insbesondere durch eine Perforationslinie 37. Die Restverbindung erstreckt sich dabei stets im Bereich von Schließkanten zwischen Schachtelteil 22 und Deckel 23. Es ist nicht zwingend erforderlich, dass sich die Restverbindung komplett im Bereich von allen Schließkanten erstreckt. Denkbar sind auch abschnitts- bzw. bereichsweise Anordnungen der Restverbindung an einem Teil der Schließkanten.

Natürlich kommen auch andere Arten von Restverbindungen in Betracht, wobei vorzugsweise vorzusehen ist, dass der Originalitätsverschluss nach der erstmaligen Ingebrauchnahme der Packung 10 nicht wieder herstellbar sein soll, um Manipulationen entgegenzuwirken.

Bei der Perforationslinie 37 besteht ein Vorteil darin, dass nach dem Auftrennen eine Art "Bruchkante" entsteht, mit rauem bzw. gezackten Kantenverlauf, an der der Konsument erkennen bzw. ertasten kann, dass die Packung 10 bereits geöffnet wurde.

### Besonderheiten des ersten Ausführungsbeispiels (Fig. 1 bis 4):

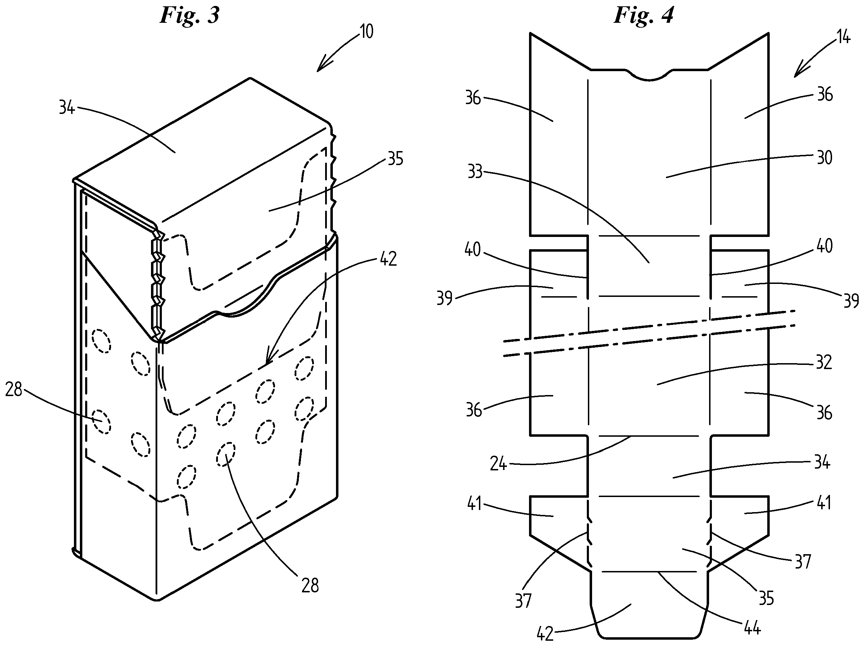

Der in Fig. 4 gezeigte Zuschnitt 14 für die Packung 10 ähnelt sehr einem klassischen Hinge-Lid-Zuschnitt. Beiderseits der Rückwand 32 und der Vorderwand 30 befinden sich die bereits angesprochenen Seitenlappen 36 zur Bildung der Seitenwände der Packung 10. Ecklappen 39 sind beiderseits der Bodenwand 33 angeordnet und mit den Seitenlappen 36 beiderseits der Rückwand 32 verbunden. Die Ecklappen 39 sind von der Bodenwand 33 durch einen Stanzschnitt 40 getrennt.

Beiderseits der Vorderwand 35 des Deckels 23 sind Seitenlappen 41 ausgebildet, die jeweils über eine Perforationslinie 37 temporär bis zur ersten Ingebrauchnahme bzw. Öffnung der Packung 10 mit der Vorderwand 35 verbunden sind.

Weiterhin ist in Verlängerung der Vorderwand 35 des Deckels 23 ein Deckelinnenlappen 42 angeordnet.

Seitenränder des Deckelinnenlappens 42 sind bereichsweise konvergierend ausgebildet, sodass die Breite des Deckelinnenlappens 42 in Längsrichtung des Zuschnitts 14 abnimmt.

Eine weitere Besonderheit des Zuschnitts 14 besteht darin, dass die Seitenlappen 36 beiderseits der Rückwand 32 des Schachtelteils 22 bis in den Bereich des Deckels 23 verlängert sind. Die Seitenlappen 36 beiderseits der Rückwand 32 sind im Bereich der Schmalseiten 17 der Packung 10 innenliegend angeordnet und werden einerseits von den Seitenlappen 36 beiderseits der Vorderwand 30 überdeckt und andererseits von den Seitenlappen 41 des Deckels 23. Die jeweils einander überdeckenden Seitenlappen 36, 41 sind untereinander verbunden, vorzugsweise durch Klebung, insbesondere mittels Leim.

Am oberen Rand der Vorderwand 30 des Schachtelteils 22 ist eine Ausnehmung 43 als Öffnungshilfe vorgesehen. Durch Eingriff in die Ausnehmung 43 kann der Konsument die Vorderwand 35 des Deckels 23 anheben, wobei die Perforationslinien 37 zwischen Vorderwand 35 des Deckels 23 und den Seitenlappen 41 des Deckels 23 zerstört werden. Die Seitenlappen 41 des Deckels 23 verbleiben aufgrund ihrer Verbindung mit den Seitenlappen 36 in ihrer Position und der Deckel 23 aus Stirnwand 34, Vorderwand 35 und Deckelinnenlappen 42 kann geöffnet werden. In diesem Ausführungsbeispiel ist der Deckel 23 somit als Deckellasche ausgebildet und weist keine Seitenwände auf.

Ferner weist der Deckel 23 auch keine Rückwand auf, weil das Liniengelenk 24 zwischen Stirnwand 34 des Deckels 23 und Rückwand 32 des Schachtelteils 22 angeordnet ist. Hiervon kann aber im Rahmen der Erfindung abgewichen werden.

Der Deckelinnenlappen 42 befindet sich bis zur erstmaligen Ingebrauchnahme der Packung 10 in der üblichen Position an der Innenseite der Vorderwand 35 des Deckels 23. Nach dem Öffnen der Packung 10 bzw. des Deckels 23 kann der Deckelinnenlappen 42 um eine Faltlinie 44 zwischen Deckelinnenlappen 42 und Vorderwand 35 des Deckels 23 verschwenkt und als Stecklasche für den (Wieder-)Verschluss des Deckels 23 bzw. der Packung 10 benutzt werden. Hierzu kann der Deckelinnenlappen 42 zwischen Vorderwand 26 des Kragens 25 und Vorderwand 30 des Schachtelteils 22 eingesteckt werden, wobei die vorzugsweise vorgesehene konvergierende Verlauf der Seitenränder des Deckelinnenlappens 42 das Einstecken der Stecklasche erleichtern.

Wie bereits erwähnt, ist der Kragen 25 mittels Leim 28 an Wandungen des Schachtelteils 22 befestigt. Die Bereiche, in denen Leim 28 vorgesehen ist, sind an die Erstreckung der Stecklasche angepasst. Entsprechend ist der Leim 28 im Bereich der Vorderwand 30 des Schachtelteils 22 unterhalb der maximalen Erstreckung der Stecklasche bei geschlossenem Deckel 23 angeordnet. Im Bereich der Seitenwand 31 des Schachtelteils 22 muss hingegen bei der Positionierung des Leims 28 keine Rücksicht auf die Erstreckung der Stecklasche genommen werden.

Die Verklebungsbereiche zwischen Kragen 25 und Schachtelteil 22 sind in den Zeichnungen durch Leimpunkte angedeutet. Es versteht sich, dass im Rahmen der Erfindung auch andere Auftragsmuster zum Einsatz kommen können, insbesondere Leimstreifen oder andere flächige Auftragsmuster.

Die als Packungsinhalt 29 vorgesehenen zwei Blisterverpackungen 12 sind im vorliegenden Fall aufrecht bzw. stehend im Schachtelteil 22 angeordnet. Der Coupon 13 befindet sich zwischen der Vorderwand 26 des Kragens und der dem Kragen 26 zugewandten Blisterverpackung 12.

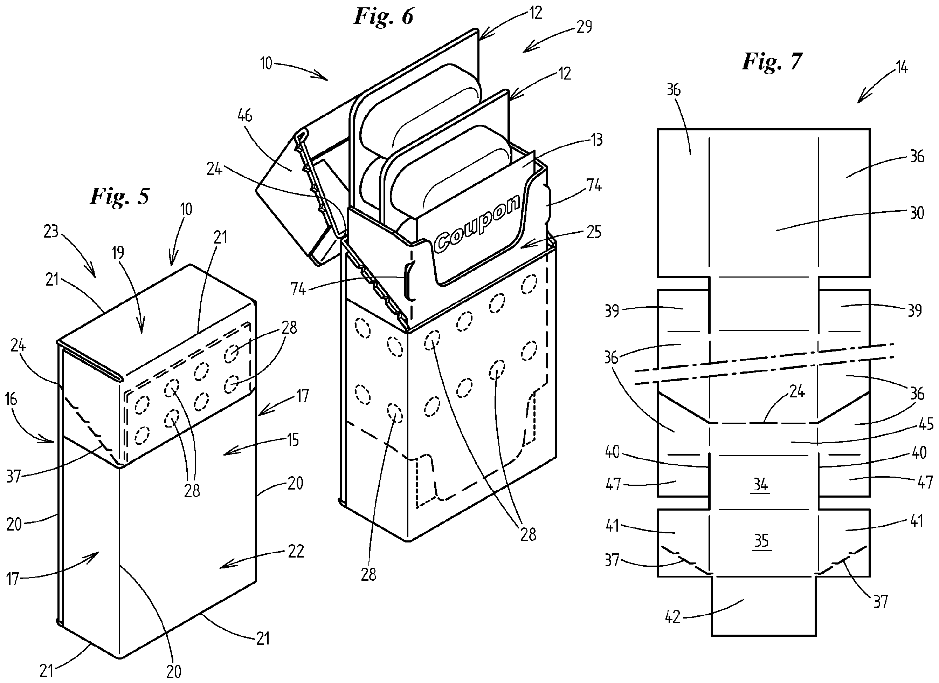

### Besonderheiten des zweiten Ausführungsbeispiels (Fig. 5 bis 7):

Die Packung 10 des zweiten Ausführungsbeispiels ist insgesamt mehr an eine klassische Hinge-Lid-Packung angelehnt, was Konstruktion und Design angeht. So verfügt der Zuschnitt 14 bzw. der Deckel 23 über eine Rückwand 45 und über Seitenwände 46. Analog zu den Ecklappen 39 sind weitere Ecklappen 47 beiderseits der Rückwand 45 des Deckels 23 am Zuschnitt 14 ausgebildet, die mit den Seitenlappen 36 beiderseits der Rückwand 32 verbunden sind und durch einen Stanzschnitt 40 von der Rückwand 45 getrennt sind.

Die Restverbindung in Form von Perforationslinien 37 ist in diesem Ausführungsbeispiel im Bereich der Schließkanten zwischen Schachtelteil 22 und Deckel 23 an den Schmalseiten 17 der Packung 10 angeordnet.

Am Zuschnitt 14 finden sich die entsprechenden Perforationslinien 37 an den Seitenlappen 41 des Deckels 23 beiderseits der Vorderwand 35 desselben.

Zum Öffnen des Deckels 23 kann der Konsument wie bei Hinge-Lid-Packungen üblich unter die Schließkante der Vorderwand 35 des Deckels 23 greifen und den Deckel 23 um das Liniengelenk 24 im Bereich der Rückseite 16 der Packung 10 in eine Öffnungsstellung schwenken, in der der Zugriff auf den Packungsinhalt 29 möglich ist. Dabei werden die beiden Perforationslinien 37 an den Schmalseiten 17 der Packung 10 zerstört.

Ein kleinerer Teil der Ecklappen 47 verbleibt dabei in Verbindung mit den Seitenlappen 36 beiderseits der Rückwand 32 am Schachtelteil 22 und ein größerer Teil der Ecklappen 47 wird mit dem Deckel 23 weggeschwenkt.

Der Packungsinhalt 29 und der Coupon 13 sind wie im ersten Ausführungsbeispiel in der Packung 10 angeordnet. Der Kragen 26 ist ebenfalls mit der Innenseite des Schachtelteils 22 mit Leim 28 verbunden, wobei allerdings bei der Anordnung des Leims 28 keine Rücksicht auf den Deckelinnenlappen 42 genommen werden muss, da dieser in seiner üblichen Position an der Innenseite der Vorderwand 35 des Deckels 23 mit Leim 28 befestigt ist.

Seitlich am Kragen 25 im Bereich der Vorderwand 26 angeordnete Kragenbremsen 74 dienen dazu, den Deckel 23 bei geschlossener Packung 10 zu halten, indem sie innenseitig an Seitenwänden 46 des Deckels 23 anliegen.

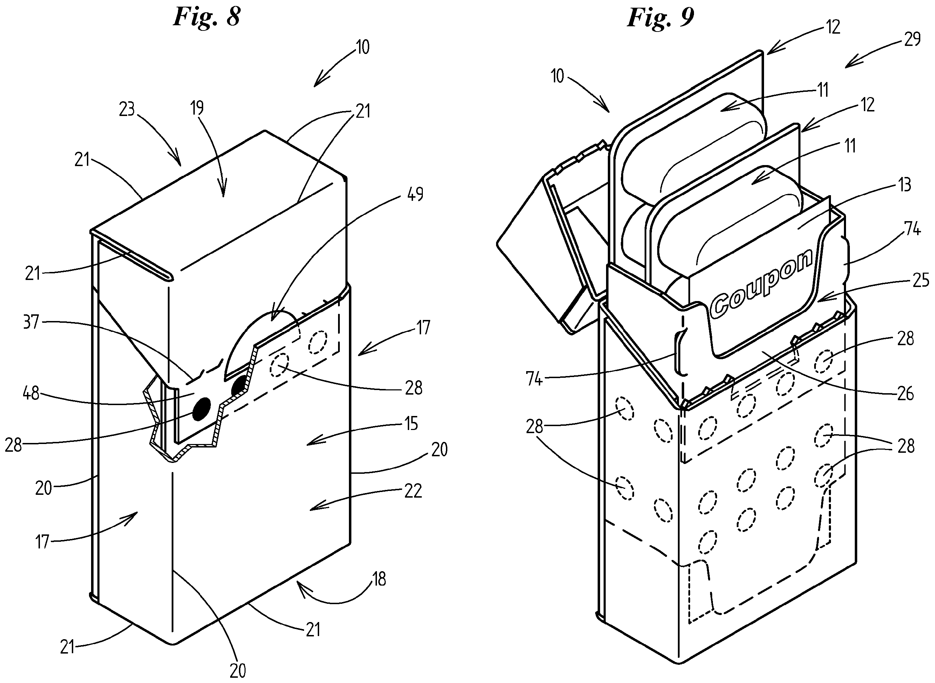

### Besonderheiten des dritten Ausführungsbeispiels (Fig. 8 bis 11):

Das dritte Ausführungsbeispiel ist hinsichtlich der grundsätzlichen Konstruktion des Zuschnitts 14 und der Packung 10 sehr ähnlich dem zweiten Ausführungsbeispiel. Allerdings befindet sich die Restverbindung nicht im Bereich der Schmalseiten 17 der Packung 10, sondern im Bereich der Vorderseite 15 derselben, genauer gesagt entlang der Schließkante zwischen Vorderwand 35 des Deckels 23 und Vorderwand 30 des Schachtelteils 22.

Statt eines Deckelinnenlappens 42 wie im zweiten Ausführungsbeispiel ist eine Verbindungslasche 48 vorgesehen, die sich an die Vorderwand 35 des Deckels 23 anschließt. Dabei ist die Faltlinie zwischen Verbindungslasche 48 und Vorderwand 35 als Perforationslinie 37 ausgebildet.

Die Verbindungslasche 48 erstreckt sich innenseitig vorzugsweise über im Wesentlichen die gesamte freie Breite der Vorderwand 30 des Schachtelteils 22 und ist mit Leim 28 mit der Vorderwand 30 des Schachtelteils 22 verbunden.

Entsprechend der Erstreckung der Verbindungslasche 48 ist der Leim 28 zur Verbindung der Vorderwand 26 des Kragens 25 mit der Vorderwand 30 des Schachtelteils 22 etwas tiefer angesetzt, wie im ersten Ausführungsbeispiel.

Ferner ist eine Öffnungshilfe vorgesehen, nämlich eine Ausnehmung 49, die sich über Teile der Verbindungslasche 48 und Teile der Vorderwand 35 des Deckels 23 erstreckt.

Die Ausnehmung 49 folgt im Bereich eines oberen Randes der Form eines Halbbogens, der bei geschlossener Packung 10 (Fig. 8) für den Konsumenten zugänglich ist. Natürlich sind auch anderen Konturen denkbar. Insgesamt hat die Ausnehmung 49 die Form eines Halbkreises, was jedoch nicht zwingend ist.

Vorzugsweise ist die Ausnehmung 49 etwa mittig in der Vorderseite 15 der Packung 10 angeordnet und unterbricht die Perforationslinie 37, sodass zwei etwa gleich lange Abschnitte der Perforationslinie 37 beiderseits der Ausnehmung 49 verbleiben.

Durch Eingriff in die Ausnehmung 49 kann der Konsument den Deckel 23 bzw. die Packung 10 Öffnen (Fig. 9). Dabei verbleibt die Verbindungslasche 48 durch die Verbindung mit der Innenseite der Vorderwand 30 des Schachtelteils 22 an selbigem.

Seitlich am Kragen 25 im Bereich der Vorderwand 26 angeordnete Kragenbremsen 74 dienen dazu, den Deckel 23 bei geschlossener Packung 10 zu halten, indem sie innenseitig an Seitenwänden 46 des Deckels 23 anliegen.

Der Packungsinhalt 29 und der Coupon 13 sind wie im ersten und zweiten Ausführungsbeispiel in der Packung 10 angeordnet.

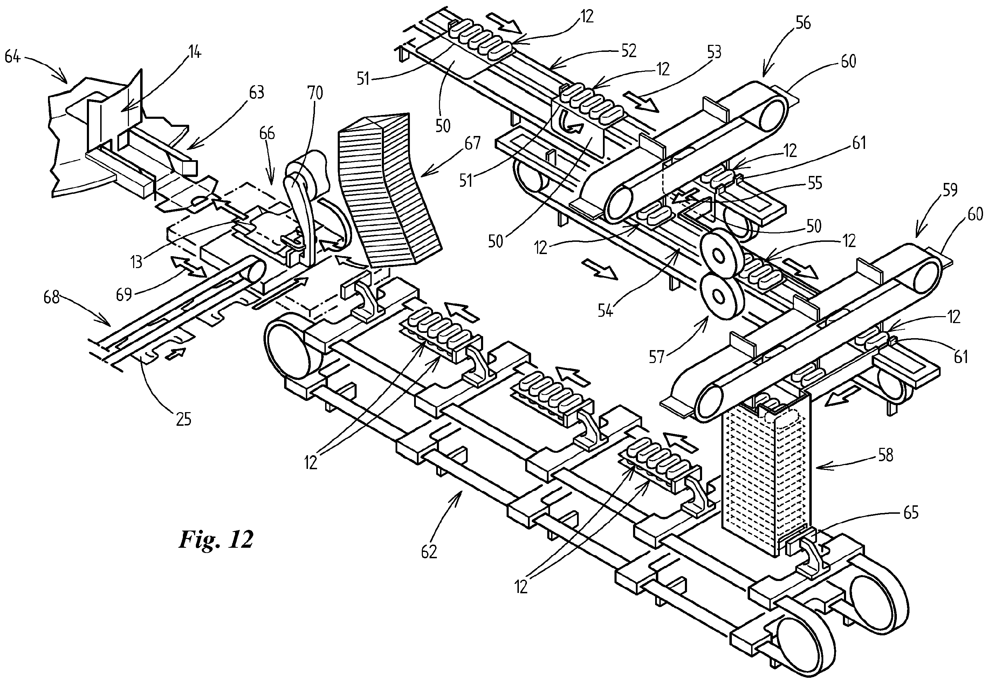

### Vorrichtung und Verfahren Fig. 12

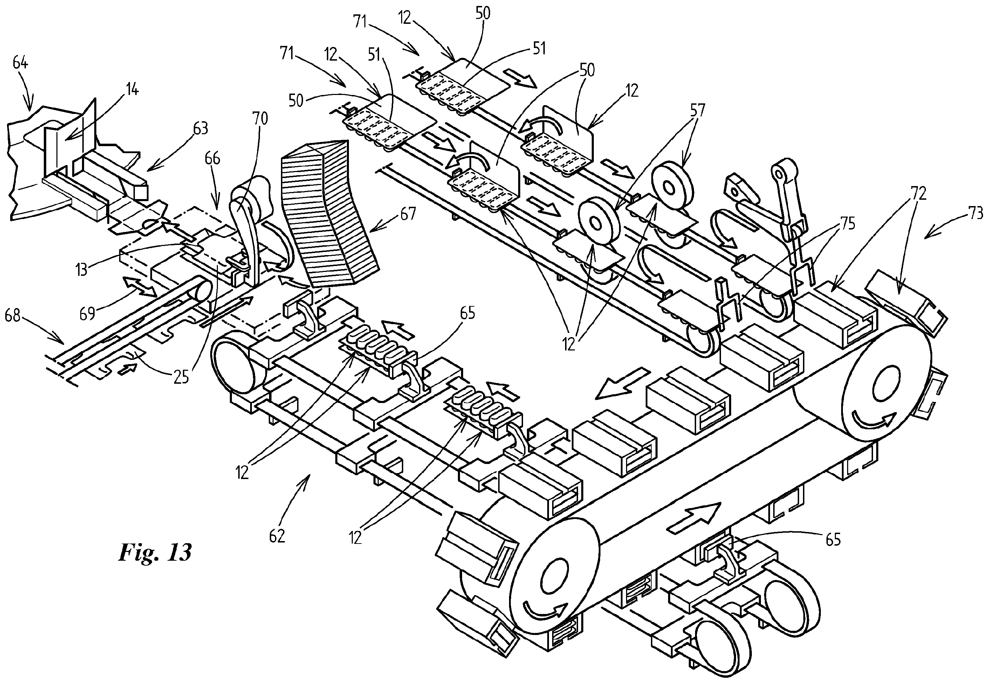

Fig. 12 (und Fig. 13) zeigt einen Ausschnitt einer Vorrichtung zur Herstellung der Packung 10, nämlich im Bereich der Handhabung der Blisterverpackungen 12 auf dem Weg in den teilweise gefalteten Zuschnitt 14.

Eine Besonderheit liegt dabei in der Art der Blisterverpackungen 12 selbst. Jede Blisterverpackungen 12 verfügt über zwei Bereiche, nämlich einen ersten Bereich, in dem die eigentlichen Produkte 11, z.B. die Aromakapseln in der Blisterverpackung 12 eingeschlossen bzw. verpackt sind, und einen zweiten Bereich, in dem die Blisterverpackung 12 eine Lasche 50 aufweist. Die beiden Bereiche bzw. Abschnitte der Blisterverpackung 12 sind durch eine Faltlinie 51 voneinander abgegrenzt, sodass die Lasche 50 gefaltet bzw. geschwenkt werden kann.

Die Blisterverpackungen 12 werden zunächst flach ausgebreitet (ungefaltet) zugeführt, sodass beide Bereiche sich in einer Ebene befinden. Die Blisterverpackungen 12 werden dann gefaltet, wobei die Lasche 50 um 180° um die Faltlinie 51 geschwenkt wird, sodass sie am ersten Bereich anliegt. In dieser Konfiguration wird die gefaltete Blisterverpackung 12 dann dem Zuschnitt 14 zugeführt.

Die ungefalteten Blisterverpackungen 12 werden auf einem (ersten) Förderer 52 transportiert, wobei der die Produkte 11 aufweisende Bereich auf dem Förderer 52 aufliegt und die Lasche 50 seitlich übersteht.

Die Blisterverpackungen 12 sind im gezeigten Ausführungsbeispiel liegend auf dem in horizontaler Ebene verlaufenden Förderer 52 angeordnet. Die Blisterverpackungen 12 sind dabei mit Abstand zueinander angeordnet und mit ihrer Längserstreckung parallel zur Förderrichtung gemäß Pfeil 53.

Während des vorzugsweise kontinuierlichen Transports der Blisterverpackungen 12 auf dem Förderer 52 werden die Laschen 50 in einem ersten Faltschritt quer zum ersten Bereich der Blisterverpackungen 12 gefaltet, vorzugsweise etwa um 90° zu diesem. Dies kann mittels eines geeigneten Faltvorgans erfolgen, beispielsweise einer Faltweiche oder eines beweglichen Faltorgans. Bei der gezeigten horizontalen Anordnung des Förderers 52 werden die Laschen 50 nach unten gefaltet.

In einem zweiten Faltschritt werden die Laschen 50 in die Endstellung gefaltet, sodass sie (unterhalb) am ersten Bereich mit den Aromakapseln anliegen. Dieser zweite Faltschritt erfolgt während einer Übergabe der teilweise gefalteten Blisterverpackungen 12 vom ersten Förderer 52 auf einen zweiten Förderer 54.

Der (zweite) Förderer 54 verläuft im gezeigten Ausführungsbeispiel parallel zum ersten Förderer 52 mit geringem Abstand zu diesem. Zwischen den beiden Förderern 52, 54 befindet sich eine vorzugsweise ortsfeste Faltplatte 55 als Faltorgan. Die teilweise gefalteten Blisterverpackungen 12 werden mittels eines (ersten) Übergabeförderers 56 von einem Förderer 52 zum anderen Förderer 54 abgeschoben, wobei die abstehenden Laschen 50 durch den Kontakt mit der Faltplatte 55 entsprechend des vorstehend beschriebenen zweiten Faltschritts gefaltet werden.

Während des weiteren Transports der gefalteten Blisterverpackungen 12 entlang des zweiten Förderers 54 wird zudem eine Faltkante im Bereich der Faltlinie 51 bearbeitet, nämlich durch Aufbringen von Druck mittels eines Walzenpaares 57, welches entlang des Transportweges angeordnet ist und zwischen denen ein entsprechender Rand der gefalteten Blisterverpackungen 12 hindurchbewegt wird. Auf diese Weise werden materialbedingte Rückstellkräfte der Blisterverpackung 12 reduziert und einer Rückstellung der gefalteten Bereiche entgegengewirkt. Natürlich sind an der Stelle eines Walzenpaares 57 auch andere Bearbeitungswerkzeuge denkbar.

Nach weiterem Transport der gefalteten und bearbeiteten Blisterverpackungen 12 auf dem zweiten Förderer 54, werden diese einem Magazin 58 zugeführt. Hierzu dient ein (zweiter) Übergabeförderer 59, der die Blisterverpackungen 12 quer vom Förderer 54 abschiebt und dem Magazin 58 (oberseitig) zuführt.

Bei der hier beschriebenen Ausrichtung der Förderer 52, 54 sind die Übergabeförderer 56, 59 jeweils oberhalb der Transportstrecke der Förderer 52, 54 angeordnet. Die Übergabeförderer 56, 59 weisen jeweils Mitnehmer 60 auf, mit denen die Blisterverpackungen 12 erfasst und abgeschoben werden. Die Übergabeförderer 56, 59 verlaufen quer zu den Förderern 52, 54. Bevor die Blisterverpackungen 12 durch die Mitnehmer 60 abgeschoben werden, werden sie jeweils durch Anschläge 61 gestoppt.

Die im Magazin 58 in einem Stapel angeordneten Blisterverpackungen 12 werden unterseitig aus dem Magazin 58 entnommen und entlang eines dritten Förderers 62 transportiert.

Auf dem dritten Förderer 62 werden die Blisterverpackungen 12 paarweise übereinander transportiert. Der Transport erfolgt hier wiederum mit Längserstreckung parallel zur Transportrichtung in Richtung eines in einer Tasche 63 eines Faltrevolvers 64 bereitgehaltenen, teilweise gefalteten Zuschnitts 14.

Die Bildung der kleinen Stapel aus zwei flach übereinanderliegenden Blisterverpackungen 12 kann dadurch erfolgen, dass zwei Blisterverpackungen 12 gleichzeitig durch einen Mitnehmer 65 des Förderers 62 aus dem Magazin 58 ausgeschoben werden. Denkbar sind auch andere, übliche Arten der Stapelbildung.

Im Anschluss an den Förderer 62 gelangen die Stapel mit zwei Blisterverpackungen 12 in den Arbeitsbereich einer Bühne 66. Im Bereich der Bühne 66 wird zunächst ein Coupon 13 auf die beiden Blisterverpackungen 12 aufgelegt und dann ein Zuschnitt 14 für den Kragen 25. Die Zufuhr der Coupons 13 erfolgt auf bekannte Weise aus einem Couponmagazin 67 und die Zufuhr der Kragen 25 auf ebenso bekannte Weise über einen Querförderer 68.

Die in Förderrichtung hin- und herbewegbare Bühne 66 entsprechend Doppelpfeil 69 dient dann zur Zuführung des Packungsinhalts 29 mit Coupon 13 und Kragen 25 in den teilweise gefalteten Zuschnitt 14 auf dem benachbarten Faltrevolver 64, wobei ein Einschieber 70 zum Einsatz kommt. Vor oder während der Zuführung zum Zuschnitt 14 werden noch die Seitenwände 27 des Kragens 25 gefaltet und dann die Faltung des Zuschnitts 14 um den Packungsinhalt 29 auf dem Faltrevolver 64 im Wesentlichen komplettiert. In der Regel werden nur noch die Wandungen der Schmalseiten 17 im Anschluss an den Faltrevolver 64 gefaltet.

### Vorrichtung und Verfahren Fig. 13

Die in Fig. 13 gezeigte Vorrichtung unterscheidet sich von der in Fig. 12 gezeigten Vorrichtung ausschließlich durch die Handhabung der Blisterverpackungen 12 vor dem Transport auf dem dritten Förderer 62. Da die Handhabung der Blisterverpackungen 12 ab Erreichen des dritten Förderers 62 identisch mit dem Ausführungsbeispiel gemäß Fig. 12 ist, wird insoweit auf die Schilderungen zu Fig. 12 verwiesen und nur der abweichende Aufbau nachfolgend beschrieben.

In einem ersten Abschnitt der Vorrichtung werden die ungefalteten Blisterverpackungen 12 auf zwei parallelen Förderern 71 liegend transportiert, wie auf dem Förderer 52 im vorhergehenden Ausführungsbeispiel.

Während des vorzugsweise kontinuierlichen Transports der Blisterverpackungen 12 auf den parallelen Förderern 71 wird analog zum vorhergehenden Ausführungsbeispiel in einem ersten Faltschritt die Lasche 50 gefaltet. Die erfolgt vorzugsweise parallel auf beiden Förderern 71 bzw. Bahnen zugleich. Die Faltung kann dabei entweder auf zwei Faltschritte aufgeteilt werden, wie im vorhergehenden Ausführungsbeispiel, oder die Faltung erfolgt komplett in Schritt um 180°. Hierbei können analog zum vorhergehenden Ausführungsbeispiel entsprechende Faltorgane zum Einsatz kommen.

Fig. 13 zeigt exemplarisch, dass die Blisterverpackungen 12 auch so gefaltet bzw. angeordnet sein können, dass die Lasche 50 oben auf den ersten Bereich der Blisterverpackungen 12 mit den Aromakapseln gefaltet werden. Es versteht sich, dass die Ausrichtung der Blisterverpackungen 12 auch wie im vorhergehenden Ausführungsbeispiel gewählt werden kann, sowie die dort gezeigte Ausrichtung auch in diesem Ausführungsbeispiel übernommen werden kann.

Während des weiteren Transports der gefalteten Blisterverpackungen 12 auf den Förderern 71 erfolgt wie im vorhergehenden Ausführungsbeispiel eine Bearbeitung der Faltkanten mit jeweils einem Walzenpaar 57. Hinsichtlich eventueller Alternativen wird auf das vorhergehende Ausführungsbeispiel verwiesen.

Die soweit zweibahnig gefalteten und bearbeiteten Blisterverpackungen 12 werden dann in Taschen 72 eines anschließenden Förderers 73 eingeschoben. Der hier als Taschenkettenförderer ausgebildete Förderer 73 verläuft quer zu den beiden Förderern 71, sodass die Blisterverpackungen 12 in Transportrichtung der Förderer 71 seitlich in die offenen Taschen 72 eingeschoben werden können. Dabei wird zunächst eine Blisterverpackung 12 von einem Förderer 71 in eine Tasche 72 eingeschoben und die Tasche 72 um eine Position in Verlängerung des zweiten Förderers 71 weiterbewegt, sodass dann die zweite Blisterverpackung 12 in die Tasche 72 zugeführt werden kann. Auf diese Weise enthält jede Tasche 72 jeweils eine Blisterverpackung 12 von beiden Förderern 71. Zum Einschieben der Blisterverpackungen 12 vom Förderer 71 in die Taschen 72 ist pro Bahn jeweils ein Schieber 75 vorgesehen.

Aus den so befüllten Taschen 72 des Förderers 73 werden die Blisterverpackungen 12 wiederum paarweise mittels eines Mitnehmers 65 ausgeschoben und entlang des (dritten) Förderers 62 transportiert. Der weitere Verlauf entspricht dabei dem vorhergehenden Ausführungsbeispiel.

Im vorliegenden Fall werden die Blisterverpackungen 12 im Bereich eines Obertrums des Förderers 73 in die Taschen 72 eingeschoben und im Bereich des Untertrums wieder ausgeschoben. Entsprechend sind die Förderer 71 und 62 auf unterschiedlichen Höhen angeordnet, wie im vorhergehenden Ausführungsbeispiel die Förderer 52 und 62.

### Abschließende Bemerkungen

Ersichtlich befassen sich die in Fig. 12 und 13 gezeigten Vorrichtungen im Wesentlichen mit der Handhabung der Blisterverpackungen 12 auf dem Weg zum Zuschnitt 14. Dies ist jedoch unabhängig von der Konstruktion der Packungen 10, sodass die Vorrichtungen auch im Zusammenhang mit anders konstruierten Packungen 10 zum Einsatz kommen können.

Die hier beschriebenen Details der Ausführungsbeispiele, wie z.B. bestimmte Leimsorten, der Einsatz von Walzen zur Bearbeitung der Blisterverpackungen 12 oder bestimmte Verfahrensschritte können optional sein, auch wenn nicht explizit erwähnt. Insofern können diese Merkmale durch andere Mittel bzw. Schritte ersetzt oder weggelassen werden, sofern es im Einzelfall sinnvoll erscheint bzw. notwendig ist.

## Patentansprüche

1. Packung für Produkte (11) der Zigarettenindustrie, mit einem Schachtelteil (22) zur Aufnahme eines Packungsinhalts (29) und mit einem Deckel (23) zum Verschließen des Schachtelteils (22), wobei Deckel (23) und Schachtelteil (22) mit jeweiligen Schließkanten bei geschlossener Packung (10) aneinander anliegen, und wobei Deckel (23) und Schachtelteil (22) im Bereich wenigstens einer Schließkante temporär, nämlich bis zum erstmaligen Öffnen der Packung (10), miteinander verbunden sind, **dadurch gekennzeichnet, dass** die Packung (10) bzw. der Deckel (23) einen Deckelinnenlappen (42) aufweist, der über eine Faltlinie mit einer Vorderwand (35) des Deckels (23) verbunden ist und bis zum erstmaligen Öffnen der Packung (10) innenseitig an der Vorderwand (35) des Deckels (23) anliegend angeordnet ist, und dass der Deckelinnenlappen (42) nach dem erstmaligen Öffnen der Packung (10) von der Vorderwand (35) des Deckels (23) wegschwenkbar und als Stecklasche zum Verschließen der Packung (10) zwischen einer Vorderwand (30) des Schachtelteils (22) und einer Vorderwand (26) eines im Schachtelteil (22) angeordneten Kragens (25) einsteckbar ist.

2. Packung nach Anspruch 1, **dadurch gekennzeichnet, dass** Deckel (23) und Schachtelteil (22) im Bereich der wenigstens einen Schließkante durch eine Restverbindung miteinander verbunden sind, insbesondere entlang einer auftrennbaren Perforationslinie (37).

3. Packung nach Anspruch 1 oder 2, **dadurch gekennzeichnet, dass** die Packung (10) eine Vorderseite (15), eine der Vorderseite (15) gegenüberliegende Rückseite (16), zwei die Vorderseite (15) und Rückseite (16) miteinander verbindende Schmalseiten (17) und eine zu Vorderseite (15), Rückseite (16) und Schmalseiten (17) quergerichtete Bodenseite (18) aufweist, und dass die temporäre Verbindung zwischen Deckel (23) und Schachtelteil (22) im Bereich von wenigstens einer Packungskante (20) gebildet ist, die parallel zu Packungskanten (20) der Packung (10) verläuft, die jeweils Vorderseite (15) bzw. Rückseite (16) mit den Schmalseiten (17) verbinden.

4. Packung nach Anspruch 3, **dadurch gekennzeichnet, dass** der Deckel (23) eine Stirnwand (34), eine Vorderwand (35) und beiderseits der Vorderwand (35) angeordnete Seitenlappen (41) aufweist, und dass Seitenwände (31) des Schachtelteils (22) durch einander überlappende und miteinander verbundene Seitenlappen (36) des Schachtelteils (22) gebildet sind, die jeweils beiderseits einer Vorderwand (30) und einer Rückwand (32) des Schachtelteils (22) angeordnet sind, und dass ein Paar von Seitenlappen (36) des Schachtelteils (22) bis in den Bereich des Deckels (23) verlängert und mit den Seitenlappen (41) des Deckels (23) verbunden sind, und dass die Restverbindung zwischen den Seitenlappen (41) des Deckels (23) und der Vorderwand (35) des Deckels (23) gebildet ist, sodass bei erstmaliger Öffnung der Packung (10) die Restverbindung aufgetrennt und der Deckel (23) mit Stirnwand (34) und Vorderwand (35) geöffnet wird, wobei die Seitenlappen (41) des Deckels (23) im Verbindung mit den Seitenlappen (36) des Schachtelteils (22) bleiben.

5. Packung nach Anspruch 1 oder einem der anderen vorhergehenden Ansprüche, **dadurch gekennzeichnet, dass** die Vorderwand (26) des Kragens (25) mit der Vorderwand (30) des Schachtelteils (22) verbunden ist, insbesondere durch Verklebung, wobei die Verbindung zwischen Kragen (25) und Schachtelteil (22) auf einer derartigen Höhe des Schachtelteils (22) angeordnet ist, dass die Stecklasche komplett zwischen Vorderwand (30) des Schachtelteils (22) und Vorderwand (26) des Kragens (25) einsteckbar ist, nämlich unterhalb eines Einsteckbereichs der Stecklasche.

6. Packung nach Anspruch 1 oder einem der anderen vorhergehenden Ansprüche, **dadurch gekennzeichnet, dass** neben dem eigentlichen Packungsinhalt (29) auch ein Druckträger als Coupon (13) oder dergleichen in der Packung (10) angeordnet ist, der vorzugsweise zwischen dem Packungsinhalt (29) und einem in der Packung (10) angeordneten Kragen (25) angeordnet ist.

## Claims

1. Pack for products (11) from the cigarette industry, having a box part (22) for accommodating pack contents (29) and having a lid (23) for closing the box part (22), wherein the lid (23) and the box part (22) bear against one another with respective closing edges when the pack (10) is closed, and wherein the lid (23) and the box part (22) are connected to one another in the region of at least one closing edge temporarily, namely until the pack (10) is opened for the first time, **characterized in that** the pack (10) or the lid (23) has a lid inner flap (42) which is connected to a front wall (35) of the lid (23) via a folding line and is arranged so as to bear against the inner side of the front wall (35) of the lid (23) until the pack (10) is opened for the first time, and **in that**, after the pack (10) has been opened for the first time, the lid inner flap (42) can be pivoted away from the front wall (35) of the lid (23) and can be inserted, in the form of a plug-in tab for closing the pack (10), between a front wall (30) of the box part (22) and a front wall (26) of a collar (25) arranged in the box part (22).

2. Pack according to Claim 1, **characterized in that** the lid (23) and the box part (22) are connected to one another in the region of the at least one closing edge by a residual connection, in particular along a separable perforation line (37).

3. Pack according to Claim 1 or 2, **characterized in that** the pack (10) has a front side (15), a rear side (16) opposite the front side (15), two narrow sides (17) connecting the front side (15) and rear side (16) to one another and a bottom side (18) directed transversely to the front side (15), rear side (16) and narrow sides (17), and **in that** the temporary connection between the lid (23) and the box part (22) is formed in the region of at least one pack edge (20), which runs parallel to pack edges (20) of the pack (10) which each connect the front side (15) or rear side (16) to the narrow sides (17).

4. Pack according to Claim 3, **characterized in that** the lid (23) has an end wall (34), a front wall (35) and side flaps (41) arranged on both sides of the front wall (35), and **in that** side walls (31) of the box part (22) are formed by mutually overlapping and interconnected side flaps (36) of the box part (22) which are arranged in each case on both sides of a front wall (30) and of a rear wall (32) of the box part (22), and **in that** a pair of side flaps (36) of the box part (22) are extended into the region of the lid (23) and connected to the side flaps (41) of the lid (23), and **in that** the residual connection is formed between the side flaps (41) of the lid (23) and the front wall (35) of the lid (23), such that, when the pack (10) is opened for the first time, the residual connection is separated and the lid (23) with the end wall (34) and the front wall (35) is opened, wherein the side flaps (41) of the lid (23) remain in connection with the side flaps (36) of the box part (22).

5. Pack according to Claim 1 or any of the other preceding claims, **characterized in that** the front wall (26) of the collar (25) is connected to the front wall (30) of the box part (22), in particular by adhesive bonding, wherein the connection between the collar (25) and the box part (22) is arranged at such a height of the box part (22) that the plug-in tab can be inserted completely between the front wall (30) of the box part (22) and the front wall (26) of the collar (25), namely below an insertion region for the plug-in tab.

6. Pack according to Claim 1 or any of the other preceding claims, **characterized in that**, in addition to the actual pack contents (29), a print substrate in the form of a coupon (13) or the like is also arranged in the pack (10), said print substrate preferably being arranged between the pack contents (29) and a collar (25) arranged in the pack (10).

## Revendications

1. Emballage pour produits (11) de l'industrie des cigarettes, avec une partie boîte (22) pour recevoir un contenu d'emballage (29) et avec un couvercle (23) pour fermer la partie boîte (22), le couvercle (23) et la partie boîte (22) reposant l'un contre l'autre avec des bords de fermeture respectifs lorsque l'emballage (10) est fermé, et le couvercle (23) et la partie boîte (22) étant reliés l'un à l'autre temporairement, c'est-à-dire jusqu'à la première ouverture de l'emballage (10), dans la zone d'au moins un bord de fermeture, **caractérisé en ce que** l'emballage (10) ou le couvercle (23) présente un rabat intérieur de couvercle (42) relié par une ligne de pliage à une paroi avant (35) du couvercle (23) et disposé sur l'intérieur de la paroi avant (35) du couvercle (23) jusqu'à la première ouverture de l'emballage (10), et **en ce que** le rabat intérieur de couvercle (42) peut être pivoté à l'écart de la paroi avant (35) du couvercle (23) après la première ouverture de l'emballage (10) et inséré en tant que languette d'insertion pour fermer l'emballage (10) entre une paroi avant (22) de la partie boîte (25) et une paroi avant (26) d'un col (22) disposé dans la partie boîte (30).

2. Emballage selon la revendication 1, **caractérisé en ce que** le couvercle (23) et la partie boîte (22) sont reliés l'un à l'autre dans la zone de l'au moins un bord de fermeture par une liaison résiduelle, en particulier le long d'une ligne de perforation séparable (37).

3. Emballage selon la revendication 1 ou 2, **caractérisé en ce que** l'emballage (10) présente un côté avant (15), un côté arrière (16) opposé au côté avant (15), deux petits côtés (17) reliant le côté avant (15) et le côté arrière (16) entre eux et un côté de fond (18) orienté transversalement par rapport au côté avant (15), au côté arrière (16) et aux petits côtés (17), et **en ce que** la liaison temporaire entre le couvercle (23) et la partie boîte (22) est formée dans la zone d'au moins un bord d'emballage (20) qui s'étend parallèlement aux bords d'emballage (20) de l'emballage (10), qui relient respectivement le côté avant (15) et le côté arrière (16) aux petits côtés (17).

4. Emballage selon la revendication 3, **caractérisé en ce que** le couvercle (23) présente une paroi frontale (34), une paroi avant (35) et des rabats latéraux (41) disposés de part et d'autre de la paroi avant (35), et **en ce que** les parois latérales (31) de la partie boîte (22) sont formées des rabats latéraux (36) de la partie boîte (22) qui se chevauchent et sont reliés entre eux, qui sont disposés des deux côtés d'une paroi avant (30) et d'une paroi arrière (32) de la partie boîte (22), et **en ce qu'**une paire de rabats latéraux (36) de la partie boîte (22) est prolongée jusque dans la zone du couvercle (23) et reliés aux rabats latéraux (41) du couvercle (23), et **en ce que** la liaison résiduelle est formée entre les rabats latéraux (23) du couvercle (23) et la paroi avant (35) du couvercle (41), de sorte que, lors de la première ouverture du paquet (10), la liaison résiduelle est rompue et le couvercle (23) est ouvert avec la paroi frontale (34) et la paroi avant (35), les rabats latéraux (41) du couvercle (23) restant en liaison avec les rabats latéraux (36) de la partie boîte (22).

5. Emballage selon la revendication 1 ou l'une quelconque des revendications précédentes, **caractérisé en ce que** la paroi avant (26) du col (25) est reliée à la paroi avant (30) de la partie boîte (22), en particulier par collage, la liaison entre le col (25) et la partie boîte (22) étant disposée à une telle hauteur de la partie boîte (22) que la languette d'insertion peut être insérée complètement entre la paroi avant (30) de la partie boîte (22) et la paroi avant (26) du col (25), c'est-à-dire en dessous d'une zone d'insertion de la languette d'insertion.

6. Emballage selon la revendication 1 ou l'une quelconque des revendications précédentes, **caractérisé en ce que** dans l'emballage (10) est également disposé, en plus du contenu de l'emballage (29) proprement dit, un support d'impression sous forme de coupon (13) ou analogue, qui est de préférence disposé entre le contenu de l'emballage (29) et un col (25) disposé dans l'emballage (10).
